# EUROPEAN PATENT APPLICATION

(11) **EP 4 191 827 A1**
(43) Date of publication of application: **07.06.2023**
(21) Application number: 21849973.9
(22) Date of filing: 31.05.2021
(51) Int. Cl.: H02J 50/12, H01F 38/14, G01S 7/41, H02M 3/335, H02J 50/00, H04B 5/00, H02M 7/217

(54) **ELECTRONIC DEVICE FOR RECEIVING WIRELESS POWER**

(30) Priority: 29.07.2020 KR 20200094642; 25.09.2020 KR 20200124864
(71) Applicant: Samsung Electronics Co., Ltd., Suwon-si, Gyeonggi-do 16677 (KR)
(72) Inventor: GU, Beomwoo, Suwon-si, Gyeonggi-do 16677 (KR); PARK, Jaehyun, Suwon-si, Gyeonggi-do 16677 (KR); BYUN, Kangho, Suwon-si, Gyeonggi-do 16677 (KR); PARK, Jaeseok, Suwon-si, Gyeonggi-do 16677 (KR); YEO, Sungku, Suwon-si, Gyeonggi-do 16677 (KR); LEE, Jeongman, Suwon-si, Gyeonggi-do 16677 (KR); LEE, Chongmin, Suwon-si, Gyeonggi-do 16677 (KR); HAN, Hyoseok, Suwon-si, Gyeonggi-do 16677 (KR)
(74) Representative: Gulde & Partner
(86) International application number: PCT/KR2021/006708
(87) International publication number: WO 2022/025404

(57) **Abstract**

According to various embodiments, a wireless power receiver for receiving wireless power from a wireless power transmitter comprises: a resonance circuit which comprises a first coil, a second coil, and a first capacitor and which is configured to receive the wireless power; and a two-way switch, wherein, when the two-way switch is in an on state, the resonance circuit can be configured to receive the wireless power since a current is induced, on the basis of a magnetic field generated by the wireless power transmitter, in a first circuit comprising the first coil and the first capacitor and a current is induced, on the basis of a magnetic field generated by the first circuit, in a second circuit comprising the second coil, and, when the two-way switch is in an off state, the resonance circuit can be configured to receive the wireless power since a current is induced, on the basis of the magnetic field generated by the wireless power transmitter, in a third circuit comprising the first coil, the second coil, and the first capacitor. Various other embodiments are possible.

## Description

### [Technical Field]

Various embodiments relate to an electronic device for receiving wireless power.

### [Background Art]

Recently, wireless charging technology using an electromagnetic induction method or a magnetic resonance method has been popularized mainly for electronic devices, such as a smartphone. When a wireless power transmitting unit (PTU) (e.g., a wireless charging pad) and a power receiving unit (PRU) (e.g., a smartphone) come into contact with or approach within a certain distance of each other, a battery of the power receiving unit may be charged by electromagnetic induction or electromagnetic resonance between a transmission coil of the power transmitting unit and a reception coil of the power receiving unit.

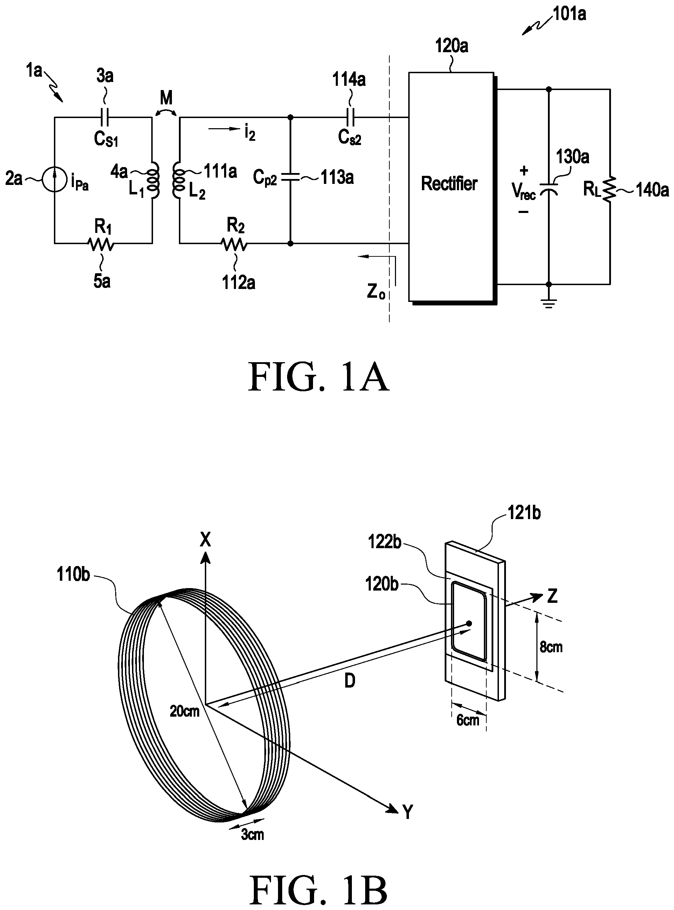

FIG. 1A shows an equivalent circuit diagram of a wireless transmission-reception system for performing wireless charging according to a comparative example.

Referring to FIG. 1A, a wireless power transmitting unit 1a may include a power supply 2a, a capacitor 3a, a resistor 5a, and/or a coil 4a. The power supply 2a may output AC power, and may include a DC/AC converter (or inverter). At least some of the capacitor 3a, the resistor 5a, or the coil 4a may form a resonance circuit and/or an impedance matching circuit. The capacitor 3a may have a capacitance of CS1, the resistor 5a may have a resistance value of R1, and the coil 4a may have an inductance of L1. Characteristic values of the capacitor 3a, the resistor 5a, and the coil 4a may be configured in consideration of a resonance frequency of the resonance circuit and/or impedance matching. A characteristic value (e.g., CS1) of the capacitor 3a may be, for example, a value matched such that an imaginary part of input impedance of the wireless power transmitting unit 1a is 0, but is not limited thereto. At least one element may be configured as a variable element of which a characteristic value is changeable. It will be understood by those skilled in the art that a connection relationship between the capacitor 3a, the resistor 5a, or the coil 4a is merely for illustration. The wireless power transmitting unit 1a may further include at least one capacitor (not shown) connected in parallel to the coil 4a, and the capacitance of the at least one capacitor (not shown) may be a value matched to satisfy a minimum coupling coefficient an output power specification of an electronic device in a power amplifier.

An electronic device 101a may include a coil 111a, a resistor 112a, a capacitor 113a, a capacitor 114a, a rectifier 120a, a capacitor 130a, and/or a load 140a. At least some of the coil 111a, the resistor 112a, the capacitor 113a, the capacitor 114a, the rectifier 120a, and the load 140a may form a resonance circuit and/or an impedance matching circuit. For example, the coil 111a and the capacitor 113a may form a resonance circuit to receive power from the wireless power transmitting unit 1a. The coil 111a may have an inductance of L₂, the resistor 112a may have a resistance of R₂, the capacitor 113a may have a capacitance of C_{P2}, and the capacitor 114a may have a capacitance of C_{S2}. Characteristic values of the coil 111a, the resistor 112a, the capacitor 113a, and the capacitor 114a may be configured in consideration of a resonance frequency of the resonance circuit and/or impedance matching. A characteristic value (e.g., Cₚ₂) of the capacitor 113a may be, for example, a value matched such that an imaginary part of output impedance of the electronic device 101a is 0, but is not limited thereto. A characteristic value (e.g., Cₛ₂) of the capacitor 114a may be, for example, configured such that a real part of the output impedance of the electronic device 101a has the same value as a load resistance, but is not limited thereto. At least one element may be configured as a variable element of which a characteristic value is changeable. It will be understood by those skilled in the art that a connection relationship between the capacitor 3a, the resistor 5a, or the coil 4a is merely for illustration.

The coil 111a and the coil 4a may be magnetically coupled to each other, that is, mutual inductance M may be formed between the coil 111a and the coil 4a. Accordingly, a current of i₂ may flow in the coil 111a, based on a magnetic field generated as a current flows in the coil 4a by the power supply 2a.

A magnetic coupling coefficient may be variable according to the distance between the wireless power transmitting unit 1a and the electronic device 101a. For example, as the distance of the electronic device 101a from the wireless power transmitting unit 1a increases, the magnetic coupling coefficient may decrease. A voltage (hereinafter, a rectified voltage) (e.g., V_{rec}) at an output terminal of the rectifier 120a may gradually increase as power reception from the wireless power transmitting unit 1a is performed. The maximum value of the rectified voltage (e.g., V_{rec}) may be different depending on the magnetic coupling coefficient. For example, as the magnetic coupling coefficient decreases, the maximum value of the rectified voltage (e.g., V_{rec}) may be small.

The capacitor 113a may be connected in parallel with the coil 111a to generate parallel resonance in the resonance circuit including the coil 111a and the capacitor 113a. The capacitor 113a may enable a high voltage to be applied to the rectifier 120a. Accordingly, the capacitor 113a may be used to generate parallel resonance to increase a voltage applied to the rectifier 120a and to increase the maximum value of the rectified voltage (e.g., V_{rec}) when the electronic device 101a is distant from the wireless power transmitting unit 1a.

### [Detailed Description of the Invention]

### [Technical Problem]

Generating parallel resonance by including the capacitor 113a as shown in FIG. 1A may increase a reception voltage when the electronic device 101a is distant from the wireless power transmitter 1a, but may cause a problem when the electronic device 101a is positioned in a short distance from the wireless power transmitter 1a.

FIG. 1B shows an illustrative wireless transmission-reception system for wirelessly charging a smartphone 121b. Referring to FIG. 1B, a transmission coil 110b of a wireless power transmitting unit may be a coil wound with a diameter of 20 cm and a width of 3 cm. The smartphone 121b may include a ferrite sheet 122b and a reception coil 120b, and the reception coil 120b may be a coil wound in a rectangular shape having a width of 6 cm and a length of 8 cm. The smartphone 121b may be positioned such that the center of the reception coil 120b and the center of the transmission coil 110b have the same x-coordinate and the same y-coordinate, and the center of the reception coil 120b may be spaced by a distance of D from the center of the transmission coil 110b in a z-axis direction.

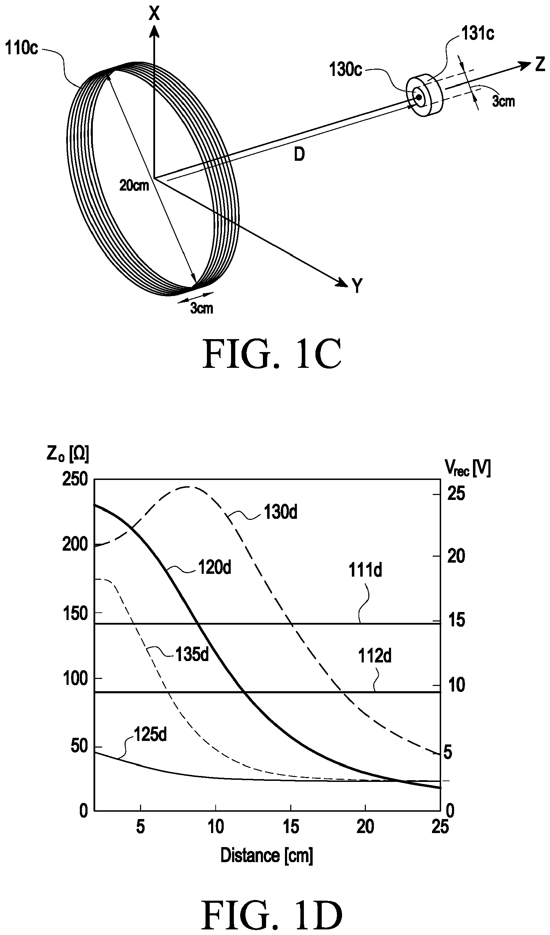

FIG. 1C shows an illustrative wireless transmission-reception system for wirelessly charging a wearable device. Referring to FIG. 1C, a transmission coil 110c of a wireless power transmitting unit may be a coil wound with a diameter of 20 cm and a width of 3 cm. The wearable device 131c may include a reception coil 130c, and the reception coil 130c may be a coil wound in a circular shape having a diameter of 3 cm. The wearable device 131c may be positioned such that the center of the reception coil 130c and the center of the transmission coil 110c have the same x-coordinate and the same y-coordinate, and the center of the reception coil 130c may be spaced by a distance of D from the center of the transmission coil 110c in a z-axis direction. An equivalent circuit diagram of the wireless power transmitting unit and the wearable device 131c of FIG. 1C may be the same as that of FIG. 1A.

FIG. 1D shows a rectified voltage and output impedance according to a distance in the illustrative wireless transmission-reception systems of FIG. 1B and FIG. 1C. Specifically, FIG. 1D shows a rectified voltage and output impedance according to a distance when an equivalent circuit diagram of the wireless power transmitting unit and the smartphone 121b of FIG. 1B and the equivalent circuit diagram of the wireless power transmitting unit and the wearable device 131c of FIG. 1C are the same as that of FIG. 1A, the transmission coils 110b and 110c are the coil 4a of FIG. 1A, and the reception coils 120b and 130c are the coil 111a of FIG. 1A. Curves of FIG. 1D are obtained when the current of the power supply 2a is 1.2A, the inductance of the transmission coils 110b and 110c is 280 µH, the inductance of the reception coil 120b is 2 µH, the inductance of the reception coil 130c is 450 nH, the resistor 140a is 23 Q, a transmission Q value is 500, a reception Q value is 50, and a frequency is 6.78 MHz.

A first curve 120d shows a rectified voltage, that is, a voltage applied to the output terminal of the rectifier 120a of FIG. 1A, according to a distance in the illustrative wireless transmission-reception system of FIG. 1C. A second curve 125d shows output impedance, that is, Z₀ of FIG. 1A, according to a distance in the illustrative wireless transmission-reception system of FIG. 1C. A third curve 130d shows a rectified voltage according to a distance in the illustrative wireless transmission-reception system of FIG. 1B. A fourth curve 135d shows output impedance according to a distance in the illustrative wireless transmission-reception system of FIG. 1B.

To prevent occurrence of an overvoltage in an internal circuit of an electronic device, a rectified voltage is required to be maintained at a predetermined value or lower, and this voltage value is an over-voltage protection (OVP) threshold value indicated by a straight line 111d. However, the first curve 120d and the third curve 130d show that the rectified voltage exceeds the OVP threshold value as the distance decreases. Due to the physical structures of the reception coil 120b of FIG. 1B and the reception coil 130c of FIG. 1C, a magnetic coupling coefficient between the reception coil 120b and the transmission coil 110b is greater than a magnetic coupling coefficient between the reception coil 130c and the transmission coil 110c. Since the level of a current induced in the reception coil 120b is greater than the level of a current induced in the reception coil 130c under the same condition, the third curve 130d intersects with the straight line 111d at a longer distance than the first curve 120d.

The second curve 125d and the fourth curve 135d show that the output impedance increases as the distance decreases. Since the magnetic coupling coefficient between the reception coil 120b and the transmission coil 110b is greater than the magnetic coupling coefficient between the reception coil 130c and the transmission coil 110c, the equivalent inductance of the reception coil 120b and the transmission coil 110b is greater than the equivalent inductance of the reception coil 130c and the transmission coil 110c at the same distance. Accordingly, the fourth curve 135d has higher output impedance than the second curve 125d at the same distance. When the output impedance is high, the impedance of the load 140a for a wireless power receiver to receive maximum power through impedance matching is high. However, since the load 140a is impossible to be indefinitely increased and has an upper limit indicated by a straight line 112d, the difference between an impedance value of the load 140a for receiving the maximum power and an actual impedance value of the load 140a increases, which may make it difficult for the wireless power receiver to receive the maximum power.

In addition, for stability of a DC/DC converter of the wireless power receiver, the impedance of the load 140a is required to be higher than the output impedance. However, when the output impedance exceeds the upper limit of the load 140a indicated by the straight line 112d, the DC/DC converter may not stably operate.

An electronic device receiving wireless power according to embodiments may form a series resonance circuit instead of a parallel resonance circuit when the distance to a wireless power transmitter is close, thereby preventing an increase in output impedance and overvoltage.

### [Technical Solution]

According to embodiments, a wireless power receiver for receiving wireless power from a wireless power transmitter may include a resonance circuit, the resonance circuit may include a first coil, a second coil, a first capacitor, and a bidirectional or back-to-back switch, the resonance circuit may be configured to receive the wireless power, the resonance circuit may be configured to receive the wireless power as a current is induced, based on a magnetic field generated by the wireless power transmitter, in a first circuit including the first coil and the first capacitor and a current is induced, based on a magnetic field generated by the first circuit, in a second circuit including the second coil when the bidirectional switch is in an on state, and the resonance circuit may be configured to receive the wireless power as a current is induced, based on the magnetic field generated by the wireless power transmitter, in a third circuit including the first coil, the second coil, and the first capacitor when the bidirectional switch is in an off state.

According to embodiments, a wireless power receiver for receiving wireless power from a wireless power transmitter may include a resonance circuit and a reception circuit, the resonance circuit may include a first coil, a second coil, a first capacitor, and a bidirectional or back-to-back switch, the resonance circuit may be configured to receive the wireless power, the reception circuit may include: a first rectification circuit configured to convert the wireless power received by the resonance circuit into DC power; a second capacitor; a DC/DC converter configured to convert the DC power output from the first rectification circuit to output the DC power; a charger configured to charge a battery by using the converted power; and the battery, the resonance circuit may be configured to be in a first state when the bidirectional switch is in an on state, the resonance circuit may be configured to be in a second state when the bidirectional switch is in an off state, the wireless power receiver may be electrically equivalent to a circuit in which a first circuit, in which the first coil and the first capacitor are connected in series, the second coil, and the reception circuit are connected in parallel when the resonance circuit is in the first state, and the wireless power receiver may be electrically equivalent to a circuit in which the first coil, the first capacitor, and the reception circuit are connected in series when the resonance circuit is in the second state.

### [Advantageous Effects]

According to embodiments, there is provided an electronic device for receiving wireless power. A wireless power receiver according to embodiments may form a parallel resonance circuit when a bidirectional switch is in an on state, and may form a series resonance circuit when the bidirectional switch is in an off state. Accordingly, by switching the state of the bidirectional switch according to the distance from a wireless power transmitter, the wireless power receiver may form the series resonance circuit to prevent an increase in output impendence and overvoltage when positioned at a short distance from the wireless power transmitter, and may form the parallel resonance circuit to increase a voltage applied to a rectifier when positioned in a long distance from the wireless power transmitter.

### [Brief Description of Drawings]

FIG. 1A shows an equivalent circuit diagram of a wireless transmission-reception system for performing wireless charging according to a comparative example;
FIG. 1B shows an illustrative wireless transmission-reception system for wirelessly charging a smartphone;
FIG. 1C shows an illustrative wireless transmission-reception system for wirelessly charging a wearable device;
FIG. 1D shows a rectified voltage and output impedance according to a distance in the illustrative wireless transmission-reception systems of FIG. 1B and FIG. 1C;
FIG. 2 is a block diagram of a wireless power receiver according to embodiments;
FIG. 3 is a flowchart illustrating operations performed by a control circuit of a wireless power receiver according to embodiments;
FIG. 4 is a circuit diagram of a wireless power receiver according to embodiments;
FIG. 5A shows an equivalent circuit of a wireless power receiver when the level of a voltage applied to a switch of a switching circuit exceeds a threshold voltage of the switch;
FIG. 5B shows an equivalent circuit of a wireless power receiver when the level of a voltage applied to a switch of a switching circuit is less than a threshold voltage of the switch;
FIG. 6 shows an illustrative form in which a first coil and a second coil are wound;
FIG. 7A is a circuit diagram of a wireless power receiver according to embodiments;
FIG. 7B shows an equivalent circuit of a wireless power receiver when the level of a voltage applied to a switch of a switching circuit exceeds a threshold voltage of the switch;
FIG. 7C shows an equivalent circuit of a wireless power receiver when the level of a voltage applied to a switch of a switching circuit is less than a threshold voltage of the switch;
FIG. 8A is a circuit diagram of a wireless power receiver according to embodiments;
FIG. 8B shows an equivalent circuit of a wireless power receiver when the level of a voltage applied to a switch of a switching circuit exceeds a threshold voltage of the switch;
FIG. 8C shows an equivalent circuit of a wireless power receiver when the level of a voltage applied to a switch of a switching circuit is less than a threshold voltage of the switch;
FIG. 9A shows output impedance according to the distance between a wireless power receiver and a wireless power transmitter when a resonance circuit forms a parallel resonance circuit and a series resonance circuit;
FIG. 9B shows an output voltage of a rectification circuit of a wireless power receiver according to the distance between a wireless power receiver and a wireless power transmitter when a resonance circuit forms a parallel resonance circuit and a series resonance circuit;
FIG. 9C shows maximum reception power according to the distance between a wireless power receiver and a wireless power transmitter when a resonance circuit forms a parallel resonance circuit and a series resonance circuit; and
FIG. 10 shows an equivalent circuit diagram of a wireless transmission-reception system for performing wireless charging according to embodiments.

### [Mode for Carrying out the Invention]

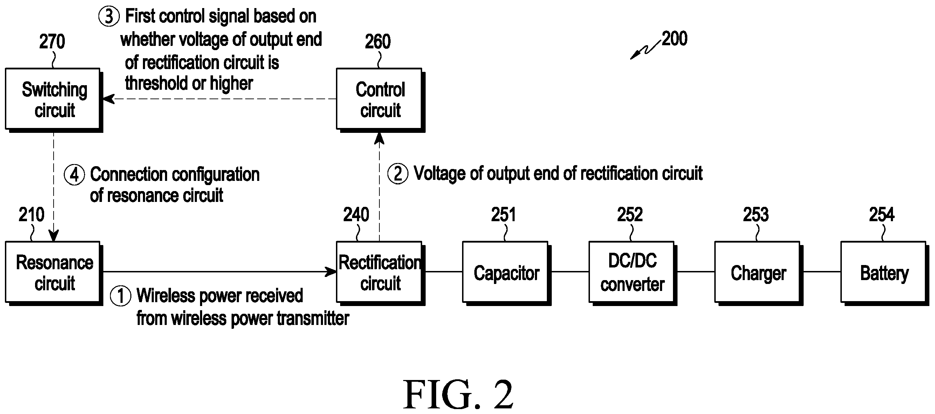

FIG. 2 is a block diagram of a wireless power receiver 200 according to embodiments. The wireless power receiver 200 may include a resonance circuit 210, a rectification circuit 240, a capacitor 251, a DC/DC converter 252, a charger 253, a battery 254, a control circuit 260, and a switching circuit 270.

The resonance circuit 210 according to embodiments of the disclosure may include at least one coil and at least one capacitor. At least some of the at least one coil included in the resonance circuit 210 may generate an induced electromotive force, based on a magnetic field generated by a wireless power transmitter, which may be expressed as receiving wireless power. For example, the resonance circuit 210 may include a first coil, a second coil magnetically coupled to the first coil, and a first capacitor. In another example, the resonance circuit 210 may include a first coil, a second coil magnetically coupled to the first coil, a first capacitor, and a second capacitor. The resonance circuit 210 according to embodiments of the disclosure may include a bidirectional switch. The bidirectional switch may be positioned between elements forming the resonance circuit 210, and may be connected to at least one element forming the resonance circuit 210.

The rectification circuit 240 according to embodiments of the disclosure may convert power (① in FIG. 2) received from the resonance circuit 210 into DC power, and may supply the converted DC power to a reception circuit including the capacitor 251, the DC/DC converter 252, the charger 253, and the battery 254.

The DC/DC converter 252 according to embodiments of the disclosure may convert or regulate the voltage of DC power output from the rectification circuit 240. According to embodiments of the disclosure, the DC/DC converter 252 may provide power having a substantially constant voltage. According to embodiments of the disclosure, the DC/DC converter 252 may not be included in the wireless power receiver 200 depending on a configuration. In an embodiment in which the DC/DC converter 252 is not included, an expression "provided to the DC/DC converter 252" used in the disclosure may be understood as an expression "provided to the charger 253", and an expression "provided from the DC/DC converter 252" may be understood as an expression "provided from the rectification circuit 240". According to embodiments of the disclosure, the DC/DC converter 252 may be connected to a power management integrated circuit (PMIC) for providing power to at least one piece of hardware in addition to the charger, and the at least one piece of hardware (or PMIC) may operate by using power from the DC/DC converter 252. According to embodiments of the disclosure, the at least one piece of hardware may be respectively connected to a separate PMIC, and may operate by using power provided through the PMIC, respectively. According to embodiments of the disclosure, the DC/DC converter 252 may be configured with one or more DC/DC converters, and the number of DC/DC converters is not limited.

The charger 253 according to embodiments of the disclosure may receive power output from the DC/DC converter 252, and may charge the battery 254 connected to the charger 253 by using the received power. According to embodiments of the disclosure, the charger 253 may control a current and/or a voltage applied to the battery 254, based on various charging modes (e.g., a constant current (CC) mode, a constant voltage (CV) mode, and a fast charging mode). For example, the charger 253 may control the current and/or the voltage applied to the battery 254, based on a charging state of the battery 254. For example, the charger 253 may control the current and/or the voltage applied to the battery 254, based on a user input. For example, when the fast charging mode is selected according to a user input, the charger may control the current and/or the voltage according to a configuration corresponding to the fast charging mode. According to embodiments of the disclosure, the battery 254 is not limited in type as long as the battery is a rechargeable secondary battery.

The control circuit 260 according to an embodiment of the disclosure may identify a rectified voltage (e.g., V_{rec}) applied to an output terminal of the rectification circuit 240 ((2) in FIG. 2). According to an embodiment of the disclosure, the control circuit 260 may receive a signal indicating the rectified voltage (e.g., V_{rec}) applied to the output terminal of the rectification circuit 240 from a voltage sensor, thereby identifying the rectified voltage (e.g., V_{rec}). According to embodiments of the disclosure, the control circuit 260 may receive an electrical signal indicating a voltage proportional to the rectified voltage (e.g., V_{rec}) from a voltage sensor configured as a voltage divider including at least one resistor, thereby identifying the rectified voltage (e.g., V_{rec}).

The control circuit 260 according to embodiments of the disclosure may compare the rectified voltage (e.g., V_{rec}) applied to the output terminal of the rectification circuit 240 with a threshold value, and may provide a first control signal to the switching circuit 270, based on whether the rectified voltage (e.g., V_{rec}) applied to the output terminal of the rectification circuit 240 is equal to or greater than the threshold value (③ in FIG. 2). According to embodiments of the disclosure, the control circuit 260 may include a comparator capable of comparing the rectified voltage (e.g., V_{rec}) applied to the output terminal of the rectification circuit 240 with the threshold value.

According to embodiments of the disclosure, the control circuit 260 may be configured as a microprocessor or a micro controlling unit (MCU), but is not limited thereto. Alternatively, the control circuit 260 may include an analog element, thereby providing the first control signal for controlling the switching circuit 270 to output a second control signal for controlling an on/off state of the bidirectional switch to the switching circuit 270, based on the rectified voltage (e.g., V_{rec}) applied to the output terminal of the rectification circuit 240 (③ in FIG. 2). According to embodiments of the disclosure, the control circuit 260 may compare the rectified voltage (e.g., V_{rec}) with the threshold value, based on a digital signal corresponding to the rectified voltage (e.g., V_{rec}), and may provide the first control signal to the switching circuit 270, based on a comparison result (③ of FIG. 2).

According to embodiments of the disclosure, the switching circuit 270 may configure a connection of the resonance circuit 210, based on the first control signal received from the control circuit 260 ((4) in FIG. 2). Specifically, the switching circuit 270 may control the on/off state of the bidirectional switch included in the resonance circuit 210, based on the first control signal, thereby configuring the connection of the resonance circuit 210 as a series resonance circuit or a parallel resonance circuit.

In the on state of the bidirectional switch, the resonance circuit 210 may be configured as a parallel resonance circuit such that the reception circuit including the rectification circuit 240, the capacitor 251, the DC/DC converter 252, the charger 253, and the battery 254 is connected in parallel with the capacitor and an inductor included in the resonance circuit 210. For example, when the resonance circuit 210 includes the first coil, the second coil magnetically coupled to the first coil, and the first capacitor, in the on state of the bidirectional switch, the resonance circuit 210 may be configured to receive wireless power as a current is induced, based on the magnetic field generated from the wireless power transmitter, in a first circuit including the first coil and the first capacitor, and a current is inducted, based on a magnetic field generated in the first circuit, in a second circuit including the second coil.

In the off state of the bidirectional switch, the resonance circuit 210 may be configured as a series resonance circuit such that the reception circuit including the rectification circuit 240, the capacitor 251, the DC/DC converter 252, the charger 253, and the battery 254 is connected in series with the capacitor and the coil included in the resonance circuit 210. For example, when the resonance circuit 210 includes the first coil, the second coil magnetically coupled to the first coil, and the first capacitor, in the off state of the bidirectional switch, the resonance circuit 210 may be configured to receive wireless power as a current is induced, based on the magnetic field generated from the wireless power transmitter, in a third circuit including the first coil, the second coil, and the first capacitor.

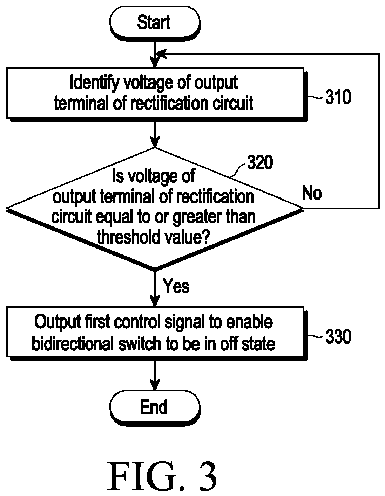

FIG. 3 is a flowchart illustrating operations performed by a control circuit (e.g., the control circuit 260) of a wireless power receiver (e.g., the wireless power receiver 200) according to embodiments.

In operation 310, the control circuit (e.g., the control circuit 260) may identify the voltage of an output terminal of a rectification circuit (e.g., the rectification circuit 240). According to embodiments of the disclosure, the control circuit 260 may receive an electrical signal indicating a rectified voltage (e.g., V_{rec}) applied to the output terminal of the rectification circuit 240 from a voltage sensor, thereby identifying the rectified voltage (e.g., V_{rec}). Alternatively, the control circuit 260 may receive an electrical signal indicating a voltage proportional to the rectified voltage (e.g., V_{rec}) from a voltage sensor configured as a voltage divider including at least one resistor, thereby identifying the rectified voltage (e.g., V_{rec}).

In operation 320, the control circuit (e.g., the control circuit 260) may identify whether the rectified voltage (e.g., V_{rec}) of the output terminal of the rectification circuit (e.g., the rectification circuit 240) identified in operation 210 is equal to or greater than a threshold value. According to various embodiments, the threshold value may be substantially the same as an OVP threshold value. According to various embodiments, the threshold value may be a value less than the OVP threshold value.

When the rectified voltage (e.g., V_{rec}) is equal to or greater than the threshold value, the control circuit 260 may output a first control signal for turning a bidirectional switch into an off state to the switching circuit 270 in operation 330. According to various embodiments, the bidirectional switch may be in an on state before operation 330 is performed. As will be described later, when the bidirectional switch is in the on state, a resonance circuit (e.g., the resonance circuit 210) may form a parallel resonance circuit, thereby increasing the rectified voltage (e.g., V_{rec}).

Referring to FIG. 1D, the rectified voltage (e.g., V_{rec}) being identified to be equal to or greater than the threshold value in operation 320 may indicate that the rectified voltage (e.g., V_{rec}) is close to the OVP threshold value and output impedance is high. As will be described later, when the bidirectional switch is controlled so that the bidirectional switch is in an off state, the resonance circuit (e.g., the resonance circuit 110) may form a series resonance circuit, thereby reducing the output impedance and reducing the rectified voltage (e.g., V_{rec}). As described above in the "Technical Problem", since the output impedance is required to be smaller than input impedance for a stable operation of the DC/DC converter, reducing the output impedance may help the DC/DC converter to operate stably. In addition, in a situation where the impedance of a load of the output terminal is impossible to be indefinitely increased, when the output impedance is reduced, the impedance of the load of the output terminal for the wireless power receiver to receive maximum power through impedance matching is reduced, thus making it possible to help the wireless power receiver 200 to receive the maximum power. Reducing the rectified voltage (e.g., V_{rec}) may prevent overvoltage by definition.

When the rectified voltage (e.g., V_{rec}) is less than the threshold value, the control circuit 260 may repeat operation 310 and operation 320 without performing operation 330 until the rectified voltage (e.g., V_{rec}) is determined to be equal to or greater than the threshold value. According to various embodiments, when the rectified voltage (e.g., V_{rec}) is less than the threshold value, the bidirectional switch may be maintained in the on state.

One of variables affecting the rectified voltage (e.g., V_{rec}) of the output terminal of the rectification circuit 240 is the distance between the wireless power receiver 200 and a wireless power transmitter. When other conditions are the same, since the mutual inductance between a coil of the wireless power receiver 200 and a coil of the wireless power transmitter increases as the wireless power receiver 200 is positioned closer to the wireless power transmitter, the level of a current induced in the coil of the wireless power transmitter increases, the rectified voltage (e.g., V_{rec}) of the output terminal of the rectification circuit 240 increases. Accordingly, when the distance between the wireless power receiver 200 and the wireless power transmitter is close, the control circuit 260 may perform operation 330 to reduce the output impedance and the rectified voltage (e.g., V_{rec}). On the contrary, when the distance between the wireless power receiver 200 and the wireless power transmitter is long, the control circuit 260 may not perform operation 330, thereby maintaining the bidirectional switch in the on state and increasing the rectified voltage (e.g., V_{rec}).

Although not shown in FIG. 3, according to embodiments, the wireless power receiver (e.g., the wireless power receiver 200) may further include a motion sensor, and the control circuit (e.g., the control circuit 260) may identify a position change or movement distance of the wireless power receiver 200 through the motion sensor. According to embodiments, the motion sensor may include an acceleration sensor, an angular velocity sensor, a geomagnetic sensor, and the like, but the configuration of the motion sensor is not limited thereto as long as the motion sensor is capable of detecting a movement of the wireless power receiver 200. The control circuit 260 may perform the operations of FIG. 3 in response to the position change or location movement of the wireless power receiver 200 being identified through the motion sensor. When there is a change in the position of the wireless power receiver 200, the distance between the wireless power receiver 200 and the wireless power transmitter is highly likely to change, and thus the control circuit 260 may adaptively control the state of the bidirectional switch by performing the operations of FIG. 3.

Although not shown in FIG. 3, according to embodiments, the wireless power receiver (e.g., the wireless power receiver 200) may further include a communication circuit, and the control circuit (e.g., the control circuit 260) may communicate with the wireless power transmitter through the communication circuit for information necessary to receive wireless power, and may identify the distance between the wireless power receiver 200 and the wireless power transmitter, based on communication with the wireless power transmitter. For example, when transmitting and receiving a signal to and from the wireless power transmitter through the communication circuit, the control circuit 260 may identify the distance between the wireless power receiver 200 and the wireless power transmitter, based on a signal transmission time. When the identified distance is less than a threshold distance, the control circuit 260 may perform operation 330.

Although not shown in FIG. 3, according to embodiments, the wireless power receiver (e.g., the wireless power receiver 200) may further include a temperature measurement circuit capable of measuring an internal temperature, and the control circuit (e.g., the control circuit 260) may identify an internal temperature through the temperature measurement circuit instead of performing operation 310, may identify whether the internal temperature is equal to or greater than a temperature threshold value instead of performing operation 320, and may perform operation 330 when identifying that the internal temperature is equal to or greater than the temperature threshold value.

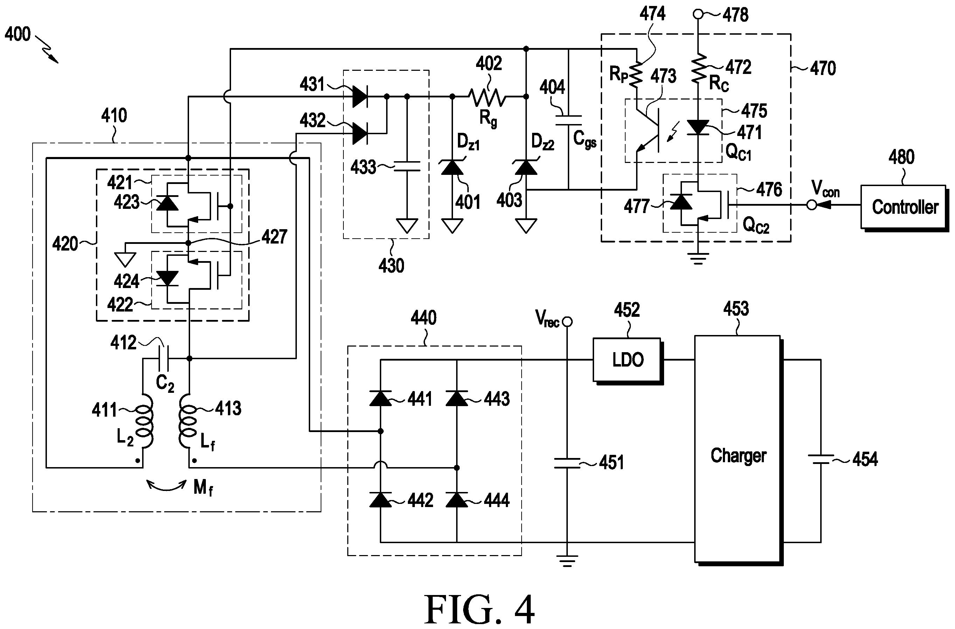

Although not shown in FIG. 3, according to embodiments, the control circuit (e.g., the control circuit 260) of the wireless power receiver (e.g., the wireless power receiver 200) may identify the level of power received by the wireless power receiver 200 instead of performing operation 310, may identify whether the level of the received power is equal to or greater than a power threshold value instead of performing operation 320, and may perform operation 330 when identifying that the level of the received power is equal to or greater than the power threshold value. FIG. 4 is a circuit diagram of a wireless power receiver 400 according to embodiments. Referring to FIG. 4, the wireless power receiver 400 may include a resonance circuit 410 (e.g., the resonance circuit 210), a first rectification circuit 430, and a second rectification circuit 440 (e.g., the rectification circuit 240), a capacitor 451 (e.g., the capacitor 251), a low drop-output (LDO) regulator 452, a charger 453 (e.g., the charger 253), a battery 454 (e.g., the battery 254), a switching circuit 470 (e.g., the switching circuit 270), and a controller 480. The resonance circuit 410 (e.g., the resonance circuit 210) according to embodiments of the disclosure may include a first coil 411, a first capacitor 412, a second coil 413, and a bidirectional switch 420. According to embodiments of the disclosure, the second coil 413 may be a coil having a relatively smaller inductance than that of the first coil 411. According to embodiments of the disclosure, the first coil 411 may be an RX resonant coil forming parallel resonance with the first capacitor 412, and the second coil 413 may be referred to as an RX auxiliary coil or a feeding coil connected to the second rectification circuit 440 (e.g., the rectification circuit 240 of FIG. 2). According to embodiments of the disclosure, the first coil 411 and the second coil 413 may be magnetically coupled, thus forming a mutual inductance M_{f} between the first coil 411 and the second coil 413. According to embodiments of the disclosure, due to the formed mutual inductance M_{f}, a voltage of an induced voltage induced in the first coil 411 increased by a quality factor Q of the resonance circuit may be induced in the second coil 413, and a current may flow through the second rectification circuit 440 (e.g., the rectification circuit 240 of FIG. 2) due to the voltage induced in the second coil 413.

As will be described later, a connection state between the first coil 411, the first capacitor 412, and the second coil 413 included in the resonance circuit 410 may be different depending on an on/off state of the bidirectional switch 420, and wireless power received by the resonance circuit 410 from a wireless power transmitter and transmitted to the second rectification circuit 440 and the first rectification circuit 430 may change depending on the connection state between the first coil 411, the first capacitor 412, and the second coil 413.

The bidirectional switch 420 according to embodiments of the disclosure may include two or more switches (e.g., a first switch 421 and a second switch 422). For example, each of the first and second switches 421 and 322 may be configure as a MOSFET, and may be any switching element capable of being switched from the on state to the off state by the switching circuit (e.g., the switching circuit 270 of FIG. 2) without limitation. According to embodiments of the disclosure, each of the first and second switches 421 and 322 may be an N-channel MOSFET, and a first diode 423 and a second diode 424 may be a body diode of the first switch 421 and a body diode of the second switch 422, respectively. According to embodiments of the disclosure, the first switch 421 and the second switch 422 may have a common source voltage as respective sources may be connected in series at a node 427. Unlike the drawing, the first and second switches 421 and 322 may be disposed to have a common drain voltage as respective drains may be connected in series. Unlike the drawing, the first and second switches 421 and 322 may be configured as P-channel MOSFETs in which respective sources are connected in series to have a common source voltage. According to embodiments of the disclosure, a common gate voltage using the common source voltage as a reference voltage may be applied to respective gates of the first and second switches 421 and 322 by control of the switching circuit 270. For example, since an induced voltage is formed based on a high resonant frequency (e.g., 6.78 MHz) in the first coil 411, the source voltage of the first and second switches 421 and 322 may alternate according to the high frequency (e.g., 6.78 MHz). The common gate voltage using the common source voltage as the reference voltage may be applied to the respective gates of the first and second switches 421 and 322, thereby stably controlling the on/off state of the first and second switches 421 and 322. In the disclosure, applying the gate voltage or applying (or outputting) a driving signal may mean applying a voltage exceeding each threshold voltage to the gates of the first and second switches 421 and 322. In the disclosure, not applying the gate voltage or not applying the driving signal may mean applying a voltage not exceeding each threshold voltage to the gates of the first and second switches 421 and 322. According to embodiments of the disclosure, while the gate voltage is applied to the respective gates of the first and second switches 421 and 322, the first and second switches 421 and 322 may be controlled to be in the on state, and both ends of the bidirectional switch 420 may be electrically connected. According to embodiments of the disclosure, while no gate voltage is applied to the respective gates of the first and second switches 421 and 322, the first and second switches 421 and 322 may be controlled to be in the off state, and electrical connection paths at both ends of the bidirectional switch 420 may be disconnected.

According to embodiments of the disclosure, at least one solid state relay (SSR) may be used instead of the bidirectional switch 420. For example, the solid state relay may include an optocoupler including a light-emitting diode and a photodiode, and depending on whether current flows through the light-emitting diode, an on/off state of the solid state relay may be controlled according to whether a current flows to the light-emitting diode. For example, when a current flows to the light-emitting diode, light may be radiated from the light-emitting diode, and when the radiated light reaches the photodiode, the photodiode may be controlled to be turned on, and thus the at least one solid state relay may be turned on. For example, when no current flows to the light-emitting diode, light may be not radiated from the light-emitting diode and the photodiode may be controlled to be turned off, and thus the at least one solid state relay may be turned off.

The first rectification circuit 430 according to embodiments of the disclosure may include a third diode 431, a fourth diode 432, and/or a capacitor 433. According to embodiments of the disclosure, the third and fourth diodes 431 and 332 may be TVS diodes. According to embodiments of the disclosure, as a voltage of a certain level or higher is applied to both ends of the first and second switches 421 and 322 when the first and second switches 421 and 322 are switched from the on state to the off state, the third and fourth diodes 431 and 332 may operate to rectify an induced voltage, thus applying the rectified voltage as a voltage at both ends of the capacitor 433. According to embodiments of the disclosure, the capacitor 433 may be charged according to the voltage rectified by the third and fourth diodes 431 and 332. According to embodiments of the disclosure, the capacitor 433 may be connected to the node 427 of the first and second switches 421 and 322, and the source voltage of the first and second switches 421 and 322 may be applied to at one end of the capacitor 433.

According to embodiments of the disclosure, the first rectification circuit 430 may further include at least one resistor (not shown) connected in parallel to the capacitor 433. According to embodiments of the disclosure, after the capacitor 433 is charged according to the voltage rectified by the third and fourth diodes 431 and 332 or a voltage spike occurring at both ends of the first and second switches 421 and 322, charged energy may be discharged through the at least one resistor connected in parallel to the capacitor 433.

According to embodiments of the disclosure, the second rectification circuit 440 may include four diodes 441, 442, 443, and 444, and may rectify an induced voltage, thus applying the rectified voltage as a voltage at both ends of the capacitor 451.

According to embodiments of the disclosure, the first rectification circuit 430 may form an energy harvesting circuit for charging the capacitor 433. The energy harvesting circuit may include the first rectification circuit 430, a Zener diode (D_{z1}) 401 connected in parallel with the capacitor 433, and a Zener diode (D_{z2}) 403. One end of the capacitor 433, the Zener diode (D_{z1}) 401, and the Zener diode (D_{z2}) 403 may be connected to the node 427, which is a common source of the first switch 421 and the second switch 422.

According to embodiments of the disclosure, the Zener diode 401 may regulate the rectified voltage applied to the capacitor 433 to a predetermined voltage (e.g., a Zener breakdown voltage of the Zener diode 401) or less. According to embodiments of the disclosure, a resistor (R_{g}) 402 may be a gate resistor of the first switch 421 and the second switch 422, and a capacitor (C_{gs}) 404 may be a gate-source capacitor of the first switch 421 and the second switch 422. According to embodiments of the disclosure, the energy harvesting circuit may further include a Zener diode (D_{z2}) 403 connected in parallel with the gate and the source of the first switch 421 and/or the gate and the source of the second switch 422. According to embodiments of the disclosure, the Zener diode 403 may regulate a voltage applied to the capacitor 404 to a predetermined voltage (e.g., a Zener breakdown voltage of the Zener diode 403) or less. According to embodiments of the disclosure, the Zener diode 401 or the Zener diode 403 may be replaced with a TVS diode, and the voltage at both ends of the capacitor 433 or the voltage at both ends of the capacitor 404 may be limited to a predetermined voltage or less through the TVS diode.

According to various embodiments, the switching circuit 470 may include an optocoupler (Qc1) 475 and a switch (Q_{C2}) 476. For example, the switch 476 may be an N-channel MOSFET connected in series with the optocoupler 475, and may be any switching element capable of being switched from the on state to the off state by an applied voltage (V_{con}) without limitation. A diode 477 may be a body diode of the switch 476. According to various embodiments, the optocoupler 475 may include a light-emitting diode (LED) 471 and a photodiode 473. According to various embodiments, a resistor (R_{P}) 474 may be an internal resistor of the photodiode 473. According to various embodiments, a resistor (R_{C}) 472 may be an internal resistor of the light-emitting diode 471 of the optocoupler 475.

According to various embodiments, the switching circuit 470 may be provided with a first control signal from the controller 480 in the form of a voltage (V_{con}) applied to the switch 476 of the optocoupler 475. According to various embodiments, the controller 480 may always be provided with power for applying the voltage (V_{con}) from the battery 454. According to various embodiments, the controller 480 may be provided with the power for applying the voltage (V_{con}), based on the LDO 452 when receiving wireless power. According to various embodiments, the controller 480 may compare a rectified voltage (V_{rec}) of an output terminal of the second rectification circuit 440 with a threshold value, and may apply the voltage (V_{con}) to the switch 476, based on a comparison result. According to various embodiments, the threshold value may be substantially the same as an OVP threshold value. According to various embodiments, the threshold value may be a value less than the OVP threshold value.

According to various embodiments, when identifying that the rectified voltage (V_{rec}) of the output terminal of the second rectification circuit 440 is equal to or greater than the threshold value, the controller 480 applies the voltage (V_{con}) exceeding a threshold voltage of the switch 476. The optocoupler 475 may operate based on the voltage (V_{con}) applied from the controller 480 to the switch 476. For example, when the level of the voltage (V_{con}) applied from the controller 480 to the switch 476 exceeds the threshold voltage of the switch 476, the switch 476 may be switched on, and the light-emitting diode 471 may be connected to a ground through the switch 476. As the light-emitting diode 471 is connected to the ground through the switch 476, the light-emitting diode 471 may be switched on based on the voltage of a node 478, thus radiating light. The voltage of the node 478 may be, for example, the rectified voltage (V_{rec}) of the output terminal of the second rectification circuit 440. Alternatively, a voltage from an external power source other than the rectified voltage (V_{rec}) of the output terminal of the second rectification circuit 440 may be applied to the light-emitting diode 471. The photodiode 473 may be switched on when the light radiated from the light emitting diode 471 arrives. As the photodiode 473 is switched on, a connection path between the resistor 474 and the sources of the first switch 421 and the second switch 422 may be formed. As a current flows along the connection path between the resistor 474 and the sources of the first switch 421 and the second switch 422, a charge of the capacitor 433 may be discharged. Accordingly, when the voltage at both ends of the capacitor 404, which is the same as the voltage between the gate and the source of the first switch 421 and the second switch 422, gradually decreases to be less than the threshold voltage of the first switch 421 and the second switch 422, the first switch 421 and the second switch 422 may be switched off.

According to various embodiments, when identifying that the rectified voltage (V_{rec}) of the output terminal of the second rectification circuit 440 is less than the threshold value, the controller 480 may control the voltage (V_{con}) applied to the switch 476 substantially to 0. When the level of the voltage (V_{con}) applied from the controller 480 to the switch 476 does not exceed the threshold voltage of the switch 476, the switch 476 may be switched off, and thus the light-emitting diode 471 may be switched off and may not radiate light. The photodiode 473 may be switched off when light radiated from the light-emitting diode 471 does not arrive. As the photodiode 473 is switched off, the resistor 474 is disconnected from the sources of the first switch 421 and the second switch 422, and the capacitor 404 may be charged due to energy stored in the capacitor 433. When the voltage at both ends of the capacitor 404 increases above the threshold voltage of the first switch 421 and the second switch 422, the first switch 421 and the second switch 422 may be switched on.

According to various embodiments, referring back to FIG. 3, in operation 320, when the rectified voltage (e.g., V_{rec}) is less than the threshold value, the controller 480 may operate to control the voltage (V_{con}) applied to the switch 476 substantially to 0, thereby maintaining the first switch 421 and the second switch 422 in the on state.

In summary, when the level of the voltage (V_{con}) applied from the controller 480 to the switch 476 of the switching circuit 470 exceeds the threshold voltage of the switch 476, the voltage at both ends of the capacitor 404 may decrease to be less than the threshold voltage of the first switch 421 and the second switch 422, and thus the first switch 421 and the second switch 422 may be switched off. However, when the voltage (V_{con}) applied from the controller 480 to the switch 476 of the switching circuit 470 is less than the threshold voltage of the switch 476, the voltage at both ends of the capacitor 404 may increase above the threshold voltage of the first switch 421 and the second switch 422, and thus the first switch 421 and the second switch 422 may be switched on. That is, the switching circuit 470 may output a control signal for controlling the bidirectional switch 420 including the first switch 421 and the second switch 422 in the form of the voltage at both ends of the capacitor 404 according to the voltage (V_{con}) applied from the controller 480 to the switch 476. In other words, with reference to the terms used in FIG. 2, the first control signal for controlling the switching circuit 470 may be the voltage (V_{con}) applied to the switch 476, and the second control signal output from the switching circuit 470 to control the on/off state of the bidirectional switch 420 may be the voltage at both ends of the capacitor 404.

Unlike in FIG. 4, according to various embodiments, the switching circuit 470 may include a floating source switch and a driving circuit for applying a driving voltage to a gate of the floating source switch, based on a control signal from the controller 480. According to various embodiments, the floating source switch may be a metal-oxide-semiconductor field-effect transistor (hereinafter, "MOSFET"). According to various embodiments, the driving circuit may include a charge pump.

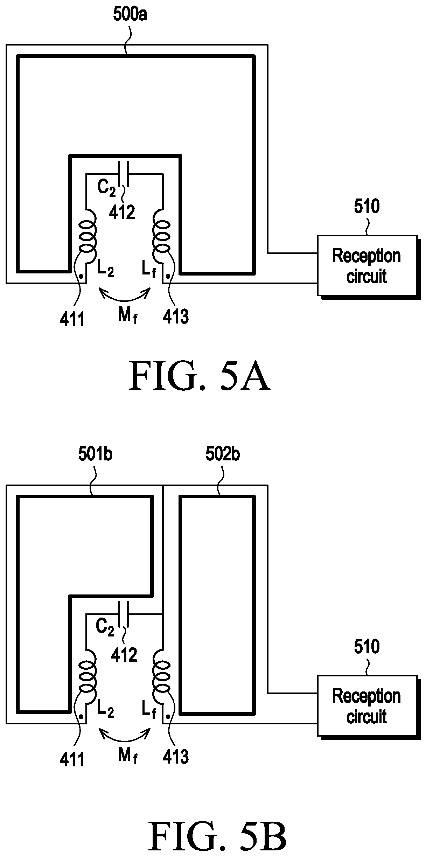

FIG. 5A shows an equivalent circuit of the wireless power receiver 400 when the level of the voltage (V_{con}) applied from the controller 480 to the switch 476 of the switching circuit 470 exceeds the threshold voltage of the switch 476. FIG. 5B shows an equivalent circuit of the wireless power receiver 400 when the voltage (V_{con}) applied from the controller 480 to the switch 476 of the switching circuit 470 is less than the threshold voltage of the switch 476. In the equivalent circuits of FIG. 5A and FIG. 5B, a reception circuit 510 may include the second rectification circuit 440, the capacitor 451, the LDO regulator 452, the charger 453, and the battery 454 of FIG. 4.

Referring to FIG. 5A, as described above with reference to FIG. 4, when the level of the voltage (V_{con}) applied from the controller 480 to the switch 476 of the switching circuit 470 exceeds the threshold voltage of the switch 476, the bidirectional switch 420 including the first switch 421 and the second switch 422 may be switched off, and thus no current flows through both ends of the bidirectional switch 420. In this case, the reception circuit 510 may be connected in series to the first coil 411, the first capacitor 412, and the second coil 413 to form a series resonance circuit, and the reception circuit 510, the first coil 411, the first capacitor 412, and the second coil 413 may form one closed loop 500a. In addition, a current may be induced in a circuit including the first coil 411, the first capacitor 412, and the second coil 413 of the resonance circuit 410, based on a magnetic field generated from the power transmitter, and thus the resonance circuit 410 may receive wireless power.

Referring to FIG. 5B, as described above with reference to FIG. 4, when the level of the voltage (V_{con}) applied from the controller 480 to the switch 476 of the switching circuit 470 is less than the threshold voltage of the switch 476, the bidirectional switch 420 including the first switch 421 and the second switch 422 may be switched on, and thus a current may flow through both ends of the bidirectional switch 420. In this case, the reception circuit 510 may be connected in parallel with a first circuit, in which the first coil 411 and the first capacity 412 are connected in series, and the second coil 413 to form a parallel resonance circuit. The first coil 411 and the first capacitor 412 may form one closed loop 501b, and the reception circuit 510 and the second coil 413 may form one closed loop 502b. In addition, a current may be induced in the first circuit including the first coil 411 and the first capacitor 412 of the resonance circuit 410, based on the magnetic field generated from the power transmitter, and a current may be induced in a second circuit including the second coil, based on a magnetic field generated in the first circuit, and thus the resonance circuit 410 may receive wireless power.

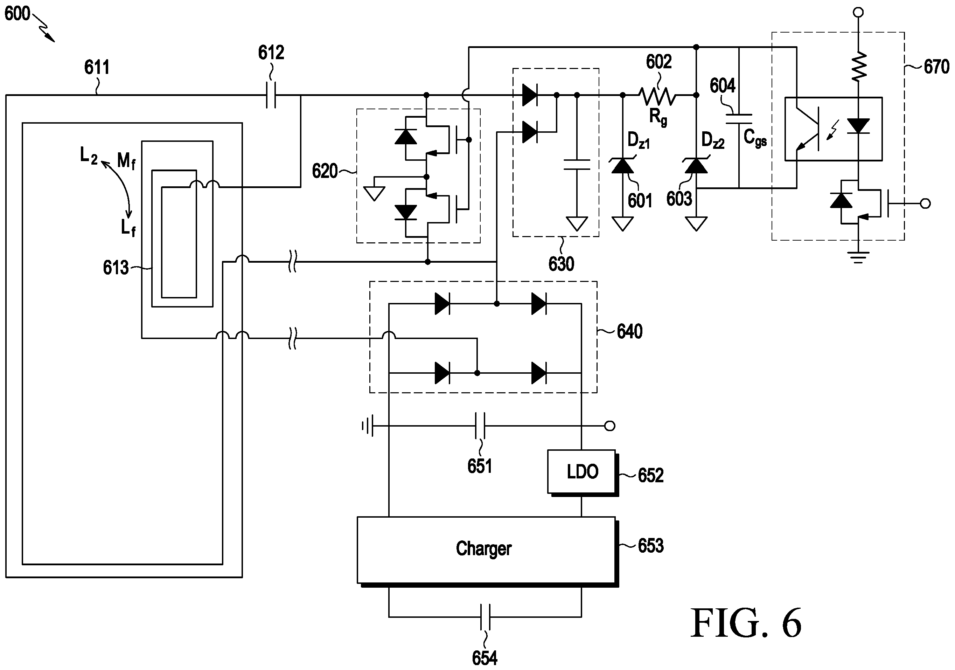

FIG. 6 shows an illustrative form in which a first coil and a second coil are wound. A wireless power receiver 600 of FIG. 6 may include a first coil 611, a first capacitor 612, a second coil 613, a bidirectional switch 620, a first rectification circuit 630, a second rectification circuit 640, a capacitor 651, an LDO regulator 652, a charger 653, a battery 654, and a switching circuit 670.

Although some components are omitted from FIG. 6, the bidirectional switch 620 of FIG. 6 may correspond to the bidirectional switch 420 of FIG. 4, the first rectification circuit 630 of FIG. 6 may correspond to the first rectification circuit 430 of FIG. 4, the second rectification circuit 640 of FIG. 6 may correspond to the second rectification circuit 440 of FIG. 4, the capacitor 651 of FIG. 6 may correspond to the capacitor 451 of FIG. 4, the LDO regulator 652 of FIG. 6 may correspond to the LDO regulator 452 of FIG. 4, the charger 653 of FIG. 6 may correspond to the charger 453 of FIG. 4, the battery 654 of FIG. 6 may correspond to the battery 454 of FIG. 4, and the switching circuit 670 of FIG. 6 may correspond to the switching circuit 470 of FIG. 4. In addition, a Zener diode (D_{z1}) 601, a Zener diode (D_{z2}) 603, a resistor (R_{g}) 602, and a capacitor (C_{gs}) 604 of FIG. 6 may correspond to the Zener diode (D_{z1}) 401, the Zener diode (D_{z2}) 403, the resistor (R_{g}) 402, and the capacitor (C_{gs}) 404 of FIG. 4, respectively.

As shown in FIG. 6, according to embodiments, the first coil 611 and the second coil 613 may be wound to have opposite relative polarities to the first coil 411 and the second coil 413 of FIG. 4. Alternatively, in other embodiments, as shown in FIG. 6, the first coil 611 and the second coil 613 may be wound to have the same relative polarity as the first coil 411 and second coil 413 of FIG. 4.

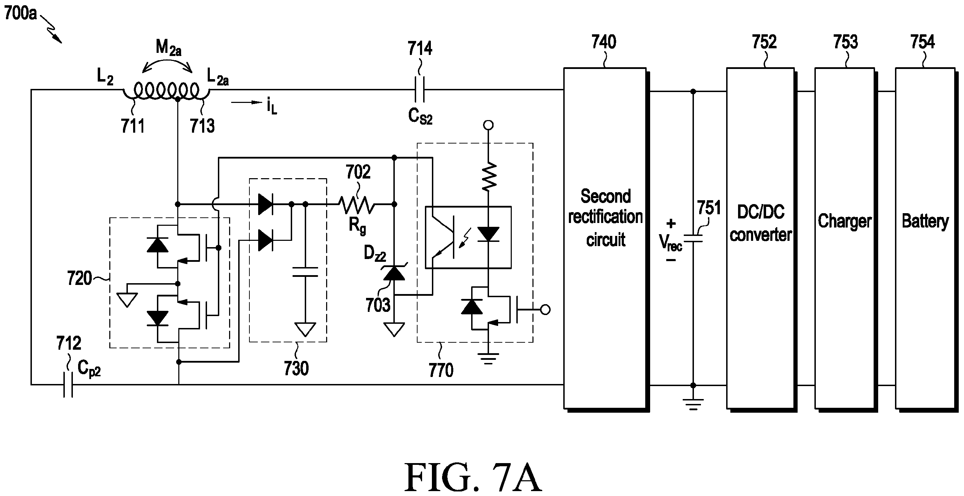

FIG. 7A is a circuit diagram of a wireless power receiver according to embodiments. Referring to FIG. 7A, the wireless power receiver 700a may include a first coil (L₂) 711, a first capacitor (Cₚ₂) 712, a second coil (L₂ₐ) 713, a second capacitor (Cₛ₂) 714, a bidirectional switch 720, a first rectification circuit 730, a second rectification circuit 740, a capacitor 751, a DC/DC converter 752, a charger 753, a battery 754, and a switching circuit 770.

The wireless power receiver 700a of FIG. 7A is the same as the wireless power receiver 400 of FIG. 4 except that the configuration of a resonance circuit including the first coil (L₂) 711, the first capacitor (Cₚ₂) 712, the second coil (L₂ₐ) 713, and the second capacitor (Cₛ₂) 714 is different from that of the resonance circuit 410 of FIG. 4. Although some components are omitted from FIG. 7A, the bidirectional switch 720 of FIG. 7A may correspond to the bidirectional switch 420 of FIG. 4, the first rectification circuit 730 of FIG. 7A may correspond to the first rectification circuit 430 of FIG. 4, the second rectification circuit 740 of FIG. 7A may correspond to the second rectification circuit 440 of FIG. 4, the capacitor 751 of FIG. 7A may correspond to the capacitor 451 of FIG. 4, the DC/DC converter 752 of FIG. 7A may correspond to the DC/DC converter 252 of FIG. 2, the charger 753 of FIG. 7A may correspond to the charger 453 of FIG. 4, the battery 754 of FIG. 7A may correspond to the battery 454 of FIG. 4, and the switching circuit 770 of FIG. 7A may correspond to the switching circuit 470 of FIG. 4. In addition, a Zener diode (D_{z2}) 703 and a resistor (R_{g}) 702 of FIG. 7A may correspond to the Zener diode (D_{z2}) 403 and the resistor (R_{g}) 402 of FIG. 4, respectively. In FIG. 7A, a gate-source capacitor of two switches included in the bidirectional switch 720 is omitted. According to an embodiment, as shown in FIG. 7A, the wireless power receiver 700a may not include the Zener diode (D_{z1}) 401.

According to embodiments, the first coil (L₂) 711 and the second coil (L₂ₐ) 713 may be magnetically coupled to each other, and mutual inductance between the first coil (L₂) 711 and the second coil (L₂ₐ) 713 may be expressed as M₂ₐ.

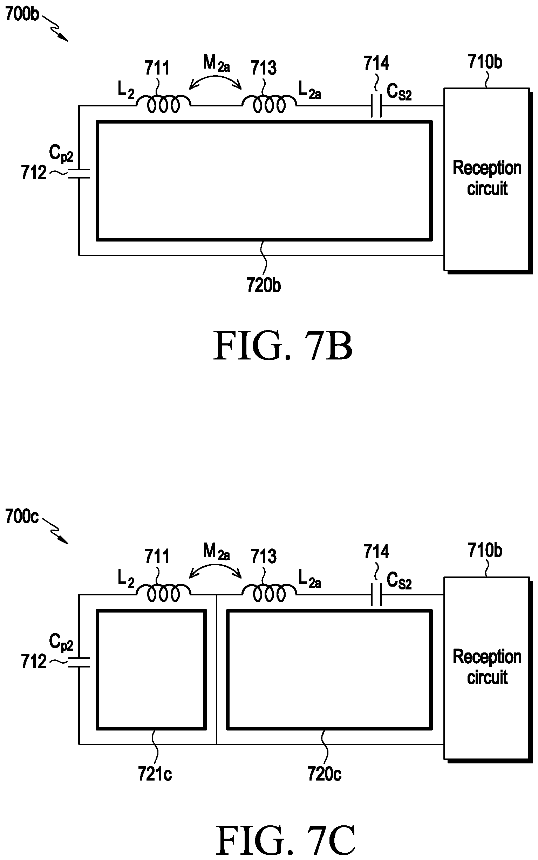

According to embodiments, when the level of a voltage applied to a switch of the switching circuit 770 exceeds the threshold voltage of the switch of the switching circuit 770, the bidirectional switch 720 may be switched off, and a current may not flow in both ends of the bidirectional switch 720. Here, an equivalent circuit of the wireless power receiver 700a is shown in FIG. 7B. The second rectification circuit 740, the capacitor 751, the DC/DC converter 752, the charger 753, and the battery 754 of FIG. 7A may be indicated by a reception circuit 710b in FIG. 7B, and the bidirectional switch 720, the first rectification circuit 730, and the switching circuit 770 of FIG. 7A may be omitted from FIG. 7B.

Referring to FIG. 7B, when the level of the voltage applied to the switch of the switching circuit 770 exceeds the threshold voltage of the switch of the switching circuit 770, a wireless power receiver 700b may be electrically equivalent to a circuit in which the first coil (L₂) 711, the first capacitor (Cₚ₂) 712, the second coil (L₂ₐ) 713, the second capacitor (Cₛ₂) 714, and the reception circuit 710b are connected in series. In this case, the reception circuit 710b may be connected in series with the first coil (L₂) 711, the first capacitor (Cₚ₂) 712, the second capacitor (Cₛ₂) 714, and the second coil (L₂ₐ) 713 to form a series resonance circuit, and the reception circuit 710b, the first coil (L₂) 711, the first capacitor (Cₚ₂) 712, the second capacitor (Cₛ₂) 714, and the second coil (L₂ₐ) 713 may form one closed loop 720b. In other words, a current may be induced in the series resonance circuit including the first coil (L₂) 711, the first capacitor (Cₚ₂) 712, the second capacitor (Cₛ₂) 714, and the second coil (L₂ₐ) 713, based on a magnetic field generated from a power transmitter, and thus the wireless power receiver 700b may receive wireless power.

According to embodiments, when the level of the voltage applied to the switch of the switching circuit 770 is less than or equal to the threshold voltage of the switch of the switching circuit 770, the bidirectional switch 720 may be switched on, and a current may flow in both ends of the bidirectional switch 720. Here, an equivalent circuit of the wireless power receiver 700a is shown in FIG. 7C. The second rectification circuit 740, the capacitor 751, the DC/DC converter 752, the charger 753, and the battery 754 of FIG. 7A may be indicated by a reception circuit 710b in FIG. 7C, and the bidirectional switch 720, the first rectification circuit 730, and the switching circuit 770 of FIG. 7A may be omitted from FIG. 7C.

Referring to FIG. 7C, the level of the voltage applied to the switch of the switching circuit 770 is less than or equal to the threshold voltage of the switch of the switching circuit 770, a wireless power receiver 700c may be electrically equivalent to a circuit in which a first circuit, in which the first coil (L₂) 711 and the first capacitor (Cₚ₂) 712 are connected in series, and a second circuit, in which the second coil (L₂ₐ) 713, the second capacitor (Cₛ₂) 714, and the reception circuit 710b are connected in series, are connected in parallel. In this case, the reception circuit 710b may be connected in parallel with the first circuit, in which the first coil (L₂) 711 and the first capacitor (Cₚ₂) 712 are connected in series, to form a parallel resonance circuit. The first coil (L₂) 711 and the first capacitor (Cₚ₂) 712 may form one closed loop 721c, and the second coil (L₂ₐ) 713, the second capacitor (Cₛ₂) 714, and the reception circuit 710b may form another closed loop 720c. In other words, a current may be induced in the first circuit including the first coil (L₂) 711 and the first capacitor (Cₚ₂) 712, based on a magnetic field generated from a power transmitter, and a current may be induced in the second circuit including the second coil (L₂ₐ) 713 and the second capacitor (Cₛ₂) 714, based on a magnetic field generated in the first circuit, and thus the wireless power receiver 700b may receive wireless power.

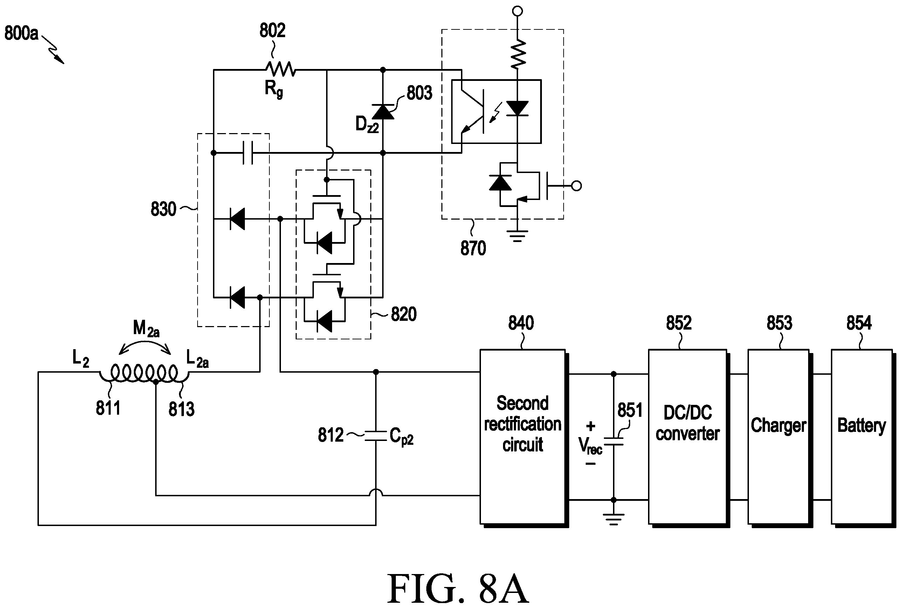

FIG. 8A is a circuit diagram of a wireless power receiver according to embodiments. Referring to FIG. 8A, the wireless power receiver 800a may include a first coil (L₂) 811, a first capacitor (Cₚ₂) 812, a second coil (L₂ₐ) 813, a bidirectional switch 820, a first rectification circuit 830, a second rectification circuit 840, a capacitor 851, a DC/DC converter 852, a charger 853, a battery 854, and a switching circuit 870.

The wireless power receiver 800a of FIG. 8A is the same as the wireless power receiver 400 of FIG. 4 except that the configuration of a resonance circuit including the first coil (L₂) 811, the first capacitor (Cₚ₂) 812, and the second coil (L₂ₐ) 813 is different from that of the resonance circuit 410 of FIG. 4. Although some components are omitted from FIG. 8A, the bidirectional switch 820 of FIG. 8A may correspond to the bidirectional switch 420 of FIG. 4, the first rectification circuit 830 of FIG. 8A may correspond to the first rectification circuit 430 of FIG. 4, the second rectification circuit 840 of FIG. 8A may correspond to the second rectification circuit 440 of FIG. 4, the capacitor 851 of FIG. 8A may correspond to the capacitor 451 of FIG. 4, the DC/DC converter 852 of FIG. 8A may correspond to the DC/DC converter 252 of FIG. 2, the charger 853 of FIG. 8A may correspond to the charger 453 of FIG. 4, the battery 854 of FIG. 8A may correspond to the battery 454 of FIG. 4, and the switching circuit 870 of FIG. 8A may correspond to the switching circuit 470 of FIG. 4. In addition, a Zener diode (D_{z2}) 803 and a resistor (R_{g}) 802 of FIG. 8A may correspond to the Zener diode (D_{z2}) 403 and the resistor (R_{g}) 402 of FIG. 4, respectively. In FIG. 8A, a gate-source capacitor of two switches included in the bidirectional switch 820 is omitted. According to an embodiment, as shown in FIG. 8A, the wireless power receiver 800a may not include the Zener diode (D_{z1}) 401.

According to embodiments, the first coil (L₂) 811 and the second coil (L₂ₐ) 813 may be magnetically coupled to each other, and mutual inductance between the first coil (L₂) 811 and the second coil (L₂ₐ) 813 may be expressed as M₂ₐ.

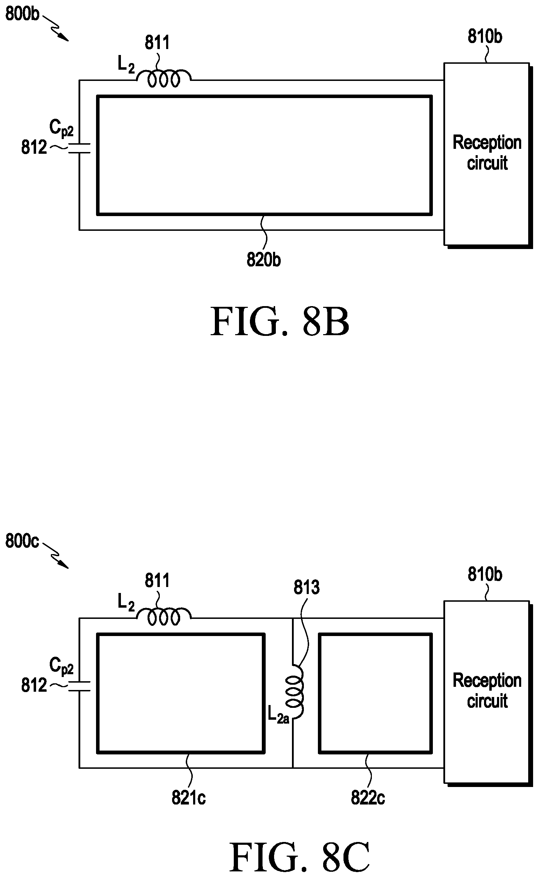

According to embodiments, when the level of a voltage applied to a switch of the switching circuit 870 exceeds the threshold voltage of the switch of the switching circuit 870, the bidirectional switch 820 may be switched off, and a current may not flow in both ends of the bidirectional switch 820. Here, an equivalent circuit of the wireless power receiver 800a is shown in FIG. 8B. The second rectification circuit 840, the capacitor 851, the DC/DC converter 852, the charger 853, and the battery 854 of FIG. 8A may be indicated by a reception circuit 810b in FIG. 8B, and the bidirectional switch 820, the first rectification circuit 830, and the switching circuit 870 of FIG. 8A may be omitted from FIG. 8B.

Referring to FIG. 8B, when the level of the voltage applied to the switch of the switching circuit 870 exceeds the threshold voltage of the switch of the switching circuit 870, a wireless power receiver 800b may be electrically equivalent to a circuit in which the first coil (L₂) 811, the first capacitor (Cₚ₂) 812, and the reception circuit 810b are connected in series. In this case, the reception circuit 810b may be connected in series with the first coil (L₂) 811 and the first capacitor (Cₚ₂) 812 to form a series resonance circuit, and the reception circuit 810b, the first coil (L₂) 811, and the first capacitor (Cₚ₂) 812 may form one closed loop 820b. In other words, a current may be induced in the series resonance circuit including the first coil (L₂) 811 and the first capacitor (Cₚ₂) 812, based on a magnetic field generated from a power transmitter, and thus the wireless power receiver 800b may receive wireless power.

According to embodiments, when the level of the voltage applied to the switch of the switching circuit 870 is less than or equal to the threshold voltage of the switch of the switching circuit 870, the bidirectional switch 820 may be switched on, and a current may flow in both ends of the bidirectional switch 820. Here, an equivalent circuit of the wireless power receiver 800a is shown in FIG. 8C. The second rectification circuit 840, the capacitor 851, the DC/DC converter 852, the charger 853, and the battery 854 of FIG. 8A may be indicated by a reception circuit 810b in FIG. 8C, and the bidirectional switch 820, the first rectification circuit 830, and the switching circuit 870 of FIG. 8A may be omitted from FIG. 8C.

Referring to FIG. 8C, the level of the voltage applied to the switch of the switching circuit 870 is less than or equal to the threshold voltage of the switch of the switching circuit 870, a wireless power receiver 800c may be electrically equivalent to a circuit in which a first circuit, in which the first coil (L₂) 811 and the first capacitor (Cₚ₂) 812 are connected in series, and a second circuit, in which the second coil (L₂ₐ) 813 and the reception circuit 810b are connected in series, are connected in parallel. In this case, the reception circuit 810b may be connected in parallel with the first circuit, in which the first coil (L₂) 811 and the first capacitor (Cₚ₂) 812 are connected in series, and the second coil (L₂ₐ) 813. The first coil (L₂) 811, the first capacitor (Cₚ₂) 812, and the second coil (L₂ₐ) 813 may form one closed loop 821c, and the second coil (L₂ₐ) 813 and the reception circuit 810b may form another closed loop 820c. In other words, a current may be induced in the first circuit including the first coil (L₂) 811 and the first capacitor (Cₚ₂) 812, based on a magnetic field generated from a power transmitter, and a current may be induced in the second coil (L₂ₐ) 813, based on a magnetic field generated in the first circuit, and thus the wireless power receiver 800b may receive wireless power. Here, the first circuit and the second coil (L₂ₐ) 813 may be understood to form a parallel resonance circuit.

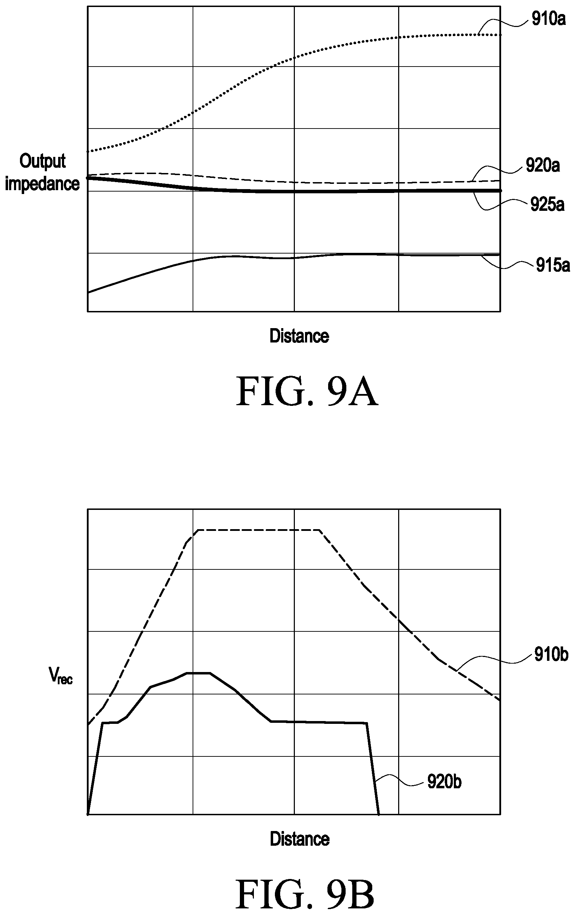

FIG. 9A shows output impedance according to the distance between the wireless power receiver 400 and the wireless power transmitter when the resonance circuit 410 of FIG. 4 forms the parallel resonance circuit and the series resonance circuit. Similarly to FIG. 1A, output impedance may be defined as the impedance of the resonance circuit 410, viewed between the resonance circuit 410 and the second rectification circuit 440. As described above with reference to FIG. 4, the resonance circuit 410 forming the parallel resonance circuit may mean that the level of the voltage (V_{con}) applied to the switch 476 of the switching circuit 470 is less than the threshold voltage of the switch 476, and thus the bidirectional switch 420 including the first switch 421 and the second switch 422 is switched on. Similarly, the resonance circuit 410 forming the series resonance circuit may mean that the level of the voltage (V_{con}) applied to the switch 476 of the switching circuit 470 exceeds the threshold voltage of the switch 476, and thus the bidirectional switch 420 including the first switch 421 and the second switch 422 is switched off.

A curve 910a denotes the size of a real part of output impedance when the resonance circuit 410 forms the parallel resonance circuit, and a curve 915a denotes the size of an imaginary part of the output impedance when the resonance circuit 410 forms the parallel resonance circuit. A curve 920a denotes the size of a real part of output impedance when the resonance circuit 410 forms the series resonance circuit, and a curve 925a denotes the size of an imaginary part of the output impedance when the resonance circuit 410 forms the series resonance circuit. Referring to the curve 910a, the curve 915a, the curve 920a, and the curve 925a, the output impedance is greater when the resonance circuit 410 forms the parallel resonance circuit than when the resonance circuit 410 forms the series resonance circuit.

FIG. 9B shows the voltage of the output terminal of the second rectification circuit 440 of the wireless power receiver 400 according to the distance between the wireless power receiver 400 and the wireless power transmitter when the resonance circuit 410 of FIG. 4 forms the parallel resonance circuit and the series resonance circuit. The meanings of the resonance circuit 410 forming the parallel resonance circuit and the resonance circuit 410 forming the series resonance circuit have been described above with reference to FIG. 9A, and thus are not repeated herein.

A curve 910b denotes the voltage of the output terminal of the second rectification circuit 440 when the resonance circuit 410 forms the parallel resonance circuit, and a curve 920b denotes the voltage of the output terminal of the second rectification circuit 440 when the resonance circuit 410 forms the series resonance circuit. The curve 910b is shown to be above the curve 920a with respect to any value of the distance between the wireless power receiver 400 and the wireless power transmitter. That is, the voltage of the output terminal of the second rectification circuit 440 is greater when the resonance circuit 410 forms the parallel resonance circuit than when the resonance circuit 410 forms the series resonance circuit.

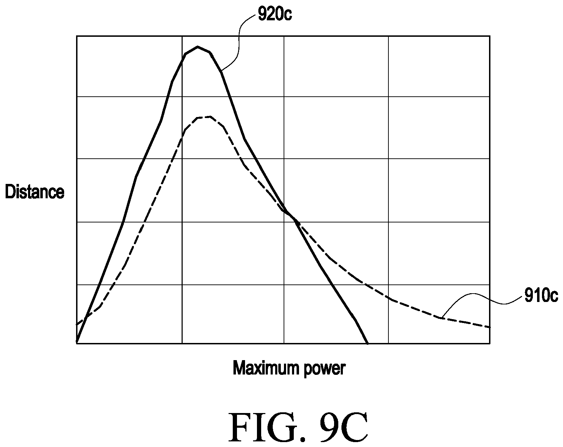

FIG. 9C shows maximum reception power according to the distance between the wireless power receiver 400 and the wireless power transmitter when the resonance circuit 410 of FIG. 4 forms the parallel resonance circuit and the series resonance circuit. The maximum reception power refers to power received by the wireless power receiver 400 when the impedance of the wireless power receiver 400 satisfies a value which maximizes the power received by the wireless power receiver 400 with respect to any value of the distance between the wireless power receiver 400 and the wireless power transmitter.

A curve 910c denotes maximum reception power according to the distance between the wireless power receiver 400 and the wireless power transmitter when the resonance circuit 410 forms the parallel resonance circuit, and a curve 920c denotes maximum reception power according to the distance between the wireless power receiver 400 and the wireless power transmitter when the resonance circuit 410 forms the series resonance circuit.

Referring to the curve 910c and the curve 920c, when the distance between the wireless power receiver 400 and the wireless power transmitter is equal to or greater than a specific distance, the curve 910c is above the curve 920c, and when the distance between the wireless power receiver 400 and the wireless power transmitter is less than the specific distance, the curve 920c is above the curve 910c. That is, when the distance between the wireless power receiver 400 and the wireless power transmitter is equal to or greater than the specific distance, the maximum reception power is higher when the resonance circuit 410 forms the parallel resonance circuit than when the resonance circuit 410 forms the series resonance circuit, and when the distance between the wireless power receiver 400 and the wireless power transmitter is less than the specific distance, the maximum reception power is higher when the resonance circuit 410 forms the series resonance circuit than when the resonance circuit 410 forms the parallel resonance circuit

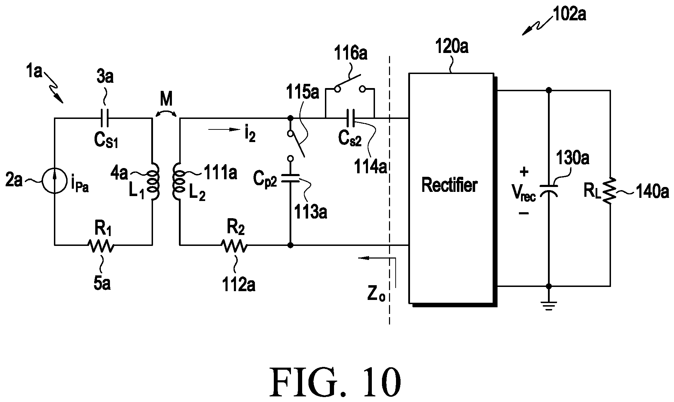

FIG. 10 shows an equivalent circuit diagram of a wireless transmission-reception system for performing wireless charging according to embodiments. Details of a wireless power transmitting unit 1a of FIG. 10 are the same as those described above with reference to FIG. 1A, and thus are not repeated herein. Referring to FIG. 10, an electronic device 102a may include a coil 111a, a resistor 112a, a capacitor 113a, a capacitor 114a, a first switch 115a, a second switch 116a, and a rectifier 120a, a capacitor 130a, and/or a load 140a. Details of the coil 111a, the resistor 112a, the capacitor 113a, the capacitor 114a, the rectifier 120a, the capacitor 130a, and the load 140a are the same as those described above with reference to FIG. 1A, and thus are not repeated herein.

Referring to FIG. 10, when both the first switch 115a and the second switch 116a are closed, the capacitor 113a may be connected in parallel with the coil 111a to generate parallel resonance in a resonance circuit including the coil 111a and the capacitor 113a. Alternatively, when both the first switch 115a and the second switch 116a are open, the capacitor 114a may be connected in series with the coil 111a to generate series resonance in a resonance circuit including the coil 111a and the capacitor 114a.

According to various embodiments, the electronic device 102a (e.g., the control circuit 260) may control both the first switch 115a and the second switch 116a to be open when the distance from the wireless power transmitting unit 1a to the electronic device 102a is close, and may control both the first switch 115a and the second switch 116a to be closed when the distance from the wireless power transmitting unit 1a to the electronic device 102a is long.

According to various embodiments, the electronic device 102a (e.g., the control circuit 260) may control both the first switch 115a and the second switch 116a to be open when the output voltage of the rectifier 120a is equal to or greater than a threshold value, and may control both the first switch 115a and the second switch 116a to be closed when the output voltage of the rectifier 120a is less than the threshold value.

According to various embodiments, a wireless power receiver for receiving wireless power from a wireless power transmitter may include a resonance circuit which includes a first coil, a second coil, and a first capacitor and is configured to receive the wireless power, and a bidirectional switch, wherein the resonance circuit may be configured to receive the wireless power as a current is induced, based on a magnetic field generated by the wireless power transmitter, in a first circuit including the first coil and the first capacitor and a current is induced, based on a magnetic field generated by the first circuit, in a second circuit including the second coil when the bidirectional switch is in an on state, and the resonance circuit may be configured to receive the wireless power as a current is induced, based on the magnetic field generated by the wireless power transmitter, in a third circuit including the first coil, the second coil, and the first capacitor when the bidirectional switch is in an off state.

According to various embodiments, the resonance circuit may further include a second capacitor, the second circuit may further include the second capacitor connected in series to the second coil when the bidirectional switch is in the on state, and the third circuit may further include the second capacitor connected in series to the first coil, the second coil, and the first capacitor when the bidirectional switch is in the off state.

According to various embodiments, the wireless power receiver may further include: a first rectification circuit configured to convert the wireless power received by the resonance circuit into DC power, a control circuit configured to output a first control signal for controlling a switching circuit to the switching circuit, the switching circuit configured to be provided with the DC power from the first rectification circuit and to output a second control signal for controlling a state of the bidirectional switch, based on the first control signal, a second rectification circuit configured to convert the wireless power received by the resonance circuit into DC power, a DC/DC converter configured to convert the DC power to output the DC power, a charger configured to charge a battery by using the converted power, and the battery.

According to various embodiments, the control circuit may be configured to output the first control signal to enable the bidirectional switch to be in the off state when a voltage of an output terminal of the second rectification circuit is equal to or greater than a threshold value, and output the first control signal to enable the bidirectional switch to be in the on state when the voltage of the output terminal of the second rectification circuit is less than the threshold value.

According to various embodiments, the wireless power receiver may further include a motion sensor, wherein the control circuit may be configured to identify a voltage of an output terminal of the second rectification circuit in response to identifying a position change of the wireless power receiver through the motion sensor, output the first control signal to enable the bidirectional switch to be in the off state when a voltage of an output terminal of the second rectification circuit is equal to or greater than a threshold value, and output the first control signal to enable the bidirectional switch to be in the on state when the voltage of the output terminal of the second rectification circuit is less than the threshold value.

According to various embodiments, the switching circuit may include a switch, the first control signal to enable the bidirectional switch to be in the off state may be a voltage less than a threshold voltage of the switch, and the first control signal to enable the bidirectional switch to be in the on state may be a voltage equal to or greater than the threshold voltage of the switch.

According to various embodiments, the switching circuit may include an optocoupler, and an on/off state of the optocoupler may be controlled according to the first control signal.

According to various embodiments, the first rectification circuit may include a first diode, a second diode, and a third capacitor, the first diode and the second diode may be configured to convert the wireless power received by the resonance circuit into the DC power, and the third capacitor may be charged based on the converted DC power.

According to various embodiments, the wireless power receiver may further include a first Zener diode connected in parallel to the third capacitor.

According to various embodiments, the bidirectional switch may include a first switch and a second switch having a common gate and a common source, and a gate-source capacitor of the first switch and the second switch may be charged based on a charge of the charged third capacitor.

According to various embodiments, the bidirectional switch may include a first switch and a second switch having a common gate and a common source, and the wireless power receiver may further include a second Zener diode disposed between the common gate and the common source.

According to various embodiments, a wireless power receiver for receiving wireless power from a wireless power transmitter may include a resonance circuit which includes a first coil, a second coil, and a first capacitor and is configured to receive the wireless power, a bidirectional switch, and a reception circuit, wherein the reception circuit may include: a first rectification circuit configured to convert the wireless power received by the resonance circuit into DC power; a second capacitor; a DC/DC converter configured to convert the DC power output from the first rectification circuit to output the DC power; a charger configured to charge a battery by using the converted power; and the battery, the resonance circuit may be configured to be in a first state when the bidirectional switch is in an on state, the resonance circuit may be configured to be in a second state when the bidirectional switch is in an off state, the wireless power receiver may be electrically equivalent to a circuit in which a first circuit, in which the first coil and the first capacitor are connected in series, the second coil, and the reception circuit are connected in parallel when the resonance circuit is in the first state, and the wireless power receiver may be electrically equivalent to a circuit in which the first coil, the first capacitor, and the reception circuit are connected in series when the resonance circuit is in the second state.

According to various embodiments, the wireless power receiver may further include a second rectification circuit configured to convert the wireless power received by the resonance circuit into DC power, a control circuit configured to output a first control signal for controlling a switching circuit to the switching circuit, and the switching circuit configured to be provided with the DC power from the second rectification circuit and to output a second control signal for controlling a state of the bidirectional switch, based on the first control signal.

According to various embodiments, the control circuit may be configured to output the first control signal to enable the bidirectional switch to be in the off state when a voltage of an output terminal of the first rectification circuit is equal to or greater than a threshold value, and output the first control signal to enable the bidirectional switch to be in the on state when the voltage of the output terminal of the first rectification circuit is less than the threshold value.

According to various embodiments, the wireless power receiver may further include a motion sensor, wherein the control circuit may be configured to identify a voltage of an output terminal of the first rectification circuit in response to identifying a position change of the wireless power receiver through the motion sensor, output the first control signal to enable the bidirectional switch to be in the off state when a voltage of an output terminal of the first rectification circuit is equal to or greater than a threshold value, and output the first control signal to enable the bidirectional switch to be in the on state when the voltage of the output terminal of the first rectification circuit is less than the threshold value.

According to various embodiments, according to claim 14 or 15, the switching circuit may include a switch, the first control signal to enable the bidirectional switch to be in the off state may be a voltage less than a threshold voltage of the switch, and the first control signal to enable the bidirectional switch to be in the on state may be a voltage equal to or greater than the threshold voltage of the switch.

According to various embodiments, the switching circuit may include an optocoupler, and an on/off state of the optocoupler may be controlled according to the first control signal.

According to various embodiments, the second rectification circuit may include a first diode, a second diode, and a third capacitor, the first diode and the second diode may be configured to convert the wireless power received by the resonance circuit into the DC power, and the third capacitor may be charged based on the converted DC power.

According to various embodiments, the bidirectional switch may include a first switch and a second switch having a common gate and a common source, and a gate-source capacitor of the first switch and the second switch may be charged based on a charge of the charged third capacitor.

According to various embodiments, the bidirectional switch may include a first switch and a second switch having a common gate and a common source, and the wireless power receiver may further include a second Zener diode disposed between the common gate and the common source.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 840) including one or more instructions that are stored in a storage medium (e.g., the internal memory 836 or external memory 838) that is readable by a machine (e.g., the electronic device 801). For example, a processor (e.g., the processor 820) of the machine (e.g., the electronic device 801) may invoke at least one of the one or more stored instructions from the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A wireless power receiver for receiving wireless power from a wireless power transmitter, the wireless power receiver comprising
a resonance circuit which comprises a first coil, a second coil, a first capacitor, and a bidirectional switch and is configured to receive the wireless power,
wherein the resonance circuit is configured to receive the wireless power as a current is induced, based on a magnetic field generated by the wireless power transmitter, in a first circuit comprising the first coil and the first capacitor and a current is induced, based on a magnetic field generated by the first circuit, in a second circuit comprising the second coil in case that the bidirectional switch is in an on state, and
the resonance circuit is configured to receive the wireless power as a current is induced, based on the magnetic field generated by the wireless power transmitter, in a third circuit comprising the first coil, the second coil, and the first capacitor in case that the bidirectional switch is in an off state.

2. The wireless power receiver of claim 1, wherein the resonance circuit further comprises a second capacitor,
the second circuit further comprises the second capacitor connected in series to the second coil in case that the bidirectional switch is in the on state, and
the third circuit further comprises the second capacitor connected in series to the first coil, the second coil, and the first capacitor in case that the bidirectional switch is in the off state.

3. The wireless power receiver of claim 1, further comprising
a first rectification circuit configured to convert the wireless power received by the resonance circuit into DC power,
a control circuit configured to output a first control signal for controlling a switching circuit to the switching circuit,
the switching circuit configured to be provided with the DC power from the first rectification circuit and to output a second control signal for controlling a state of the bidirectional switch, based on the first control signal,
a second rectification circuit configured to convert the wireless power received by the resonance circuit into DC power,
a DC/DC converter configured to convert the DC power to output the DC power,
a charger configured to charge a battery by using the converted power, and
the battery.

4. The wireless power receiver of claim 3, wherein the control circuit is configured to
output the first control signal to enable the bidirectional switch to be in the off state in case that a voltage of an output terminal of the second rectification circuit is equal to or greater than a threshold value, and
output the first control signal to enable the bidirectional switch to be in the on state in case that the voltage of the output terminal of the second rectification circuit is less than the threshold value.

5. The wireless power receiver of claim 3, further comprising
a motion sensor,
wherein the control circuit is configured to
identify a voltage of an output terminal of the second rectification circuit in response to identifying a position change of the wireless power receiver through the motion sensor,
output the first control signal to enable the bidirectional switch to be in the off state in case that a voltage of an output terminal of the second rectification circuit is equal to or greater than a threshold value, and
output the first control signal to enable the bidirectional switch to be in the on state in case that the voltage of the output terminal of the second rectification circuit is less than the threshold value.

6. The wireless power receiver of claim 3, wherein the switching circuit comprises an optocoupler, and
an on/off state of the optocoupler is controlled according to the first control signal.

7. The wireless power receiver of claim 3, wherein the first rectification circuit comprises a first diode, a second diode, and a third capacitor,
the first diode and the second diode are configured to convert the wireless power received by the resonance circuit into the DC power, and
the third capacitor is charged based on the converted DC power.

8. The wireless power receiver of claim 7, further comprising
a first Zener diode connected in parallel to the third capacitor.

9. A wireless power receiver for receiving wireless power from a wireless power transmitter, the wireless power receiver comprising
a resonance circuit which comprises a first coil, a second coil, a first capacitor, and a bidirectional switch and is configured to receive the wireless power, and
a reception circuit,
wherein the reception circuit comprises:
a first rectification circuit configured to convert the wireless power received by the resonance circuit into DC power;
a second capacitor;
a DC/DC converter configured to convert the DC power output from the first rectification circuit to output the DC power;
a charger configured to charge a battery by using the converted power; and
the battery,
the resonance circuit is configured to be in a first state in case that the bidirectional switch is in an on state,
the resonance circuit is configured to be in a second state in case that the bidirectional switch is in an off state,
the wireless power receiver is electrically equivalent to a circuit in which a first circuit, in which the first coil and the first capacitor are connected in series, the second coil, and the reception circuit are connected in parallel in case that the resonance circuit is in the first state, and
the wireless power receiver is electrically equivalent to a circuit in which the first coil, the first capacitor, and the reception circuit are connected in series in case that the resonance circuit is in the second state.

10. The wireless power receiver of claim 9, further comprising
a second rectification circuit configured to convert the wireless power received by the resonance circuit into DC power,
a control circuit configured to output a first control signal for controlling a switching circuit to the switching circuit, and
the switching circuit configured to be provided with the DC power from the second rectification circuit and to output a second control signal for controlling a state of the bidirectional switch, based on the first control signal.

11. The wireless power receiver of claim 10, wherein the control circuit is configured to
output the first control signal to enable the bidirectional switch to be in the off state in case that a voltage of an output terminal of the first rectification circuit is equal to or greater than a threshold value, and
output the first control signal to enable the bidirectional switch to be in the on state in case that the voltage of the output terminal of the first rectification circuit is less than the threshold value.

12. The wireless power receiver of claim 10, further comprising
a motion sensor,
wherein the control circuit is configured to
identify a voltage of an output terminal of the first rectification circuit in response to identifying a position change of the wireless power receiver through the motion sensor,
output the first control signal to enable the bidirectional switch to be in the off state in case that a voltage of an output terminal of the first rectification circuit is equal to or greater than a threshold value, and
output the first control signal to enable the bidirectional switch to be in the on state in case that the voltage of the output terminal of the first rectification circuit is less than the threshold value.

13. The wireless power receiver of claim 10, wherein the switching circuit comprises an optocoupler, and
an on/off state of the optocoupler is controlled according to the first control signal.

14. The wireless power receiver of claim 10, wherein the second rectification circuit comprises a first diode, a second diode, and a third capacitor,
the first diode and the second diode are configured to convert the wireless power received by the resonance circuit into the DC power, and
the third capacitor is charged based on the converted DC power.

15. The wireless power receiver of claim 14, wherein the bidirectional switch comprises a first switch and a second switch having a common gate and a common source, and
a gate-source capacitor of the first switch and the second switch is charged based on a charge of the charged third capacitor.
